# EUROPÄISCHE PATENTSCHRIFT

(11) **EP 3 568 328 B1**
(45) Veröffentlichungstag und Bekanntmachung des Hinweises auf die Patenterteilung: **02.06.2021**
(21) Anmeldenummer: 17832776.3
(22) Anmeldetag: 20.12.2017
(51) Int. Cl.: B60T 8/40, B60T 13/66, B60T 13/74

(54) **BREMSANLAGE FÜR KRAFTFAHRZEUGE SOWIE VERFAHREN ZUM BETRIEB EINER BREMSANLAGE**
BRAKE SYSTEM FOR MOTOR VEHICLES AND METHOD FOR OPERATING A BRAKE SYSTEM
SYSTÈME DE FREINAGE POUR VÉHICULES AUTOMOBILES ET PROCÉDÉ POUR FAIRE FONCTIONNER UN SYSTÈME DE FREINAGE

(30) Priorität: 11.01.2017 DE 102017200342; 06.11.2017 DE 102017219598
(43) Veröffentlichungstag der Anmeldung: 20.11.2019
(73) Patentinhaber: Continental Teves AG & Co. OHG, 60488 Frankfurt am Main (DE)
(72) Erfinder: ZIMMERMANN, Jochen, 56357 Oberwallmenach (DE); GRIMM, Robert, 65719 Hofheim (DE); BAECHLE, Martin, 65779 Kelkheim (DE)
(74) Vertreter: Continental Corporation
(86) Internationale Anmeldenummer: PCT/EP2017/083843
(87) Internationale Veröffentlichungsnummer: WO 2018/130393

(56) Entgegenhaltungen:
- WO-A1-2004/016489
- WO-A1-2005/014352
- WO-A1-2014/048600
- WO-A1-2015/104122
- CN-U- 204 309 768
- DE-A1- 10 235 288
- DE-A1-102012 219 390
- FR-A1- 2 655 933
- GB-A- 2 158 901

## Beschreibung

Die Erfindung betrifft eine Bremsanlage für ein Kraftfahrzeug gemäß dem Oberbegriff von Anspruch 1 und ein Verfahren zum Betrieb einer Bremsanlage gemäß dem Oberbegriff von Anspruch 8, sowie ein Verfahren zum Betrieb einer Bremsanlage gemäß dem Oberbegriff von Anspruch 9.

Aus der WO 2011/029812 A1 ist eine Bremsanlage mit einem bremspedalbetätigbaren Tandemhauptbremszylinder, einem Wegsimulator und einer elektrisch steuerbaren Druckbereitstellungseinrichtung bekannt. Die vier Radbremsen der Bremsanlage sind in zwei Bremskreisen angeordnet, wobei jeder Bremskreis mit einem der beiden Druckräume des zweikreisigen Hauptbremszylinders verbunden ist. Zur Realisierung einer "Bra-ke-by-wire"-Betriebsart und einer Rückfallbetriebsart sind zwei Trennventile und zwei Zuschaltventile notwendig, um die Radbremsen von dem Hauptbremszylinder und der Druckbereitstellungseinrichtung zu trennen.

Aus der WO 2005/014352 A1 ist eine Bremsanlage mit einem bremspedalbetätigbaren, einkreisigen Hauptbremszylinder und einer elektrisch steuerbaren Druckbereitstellungseinrichtung in Form einer Pumpe bekannt. Die Bremsanlage ist einkreisig aufgebaut. Die Druckkammer des Hauptbremszylinders ist über eine erste gemeinsame Leitung und ein Trennventil je Radbremse mit allen Radbremsen verbunden. Weiterhin ist die Pumpe über eine zweite gemeinsame Leitung und ein Einlassventil je Radbremse mit allen Radbremsen verbunden. Ein Druckabbau ist durch ein Auslassventil je Radbremse möglich. Eine Trennung in zwei Bremskreise ist nicht möglich, was im Falle einer Leckage nachteilig ist und die Verfügbarkeit bzw. die Betriebssicherheit der Bremsanlage verringert.

In der DE 10 2014 217 428 A1 wird eine gattungsgemäße Bremsanlage mit einem bremspedalbetätigbaren Hauptbremszylinder, einer elektrisch steuerbaren Druckbereitstellungseinrichtung in Form einer Pumpe und einem Kreistrennventil beschrieben. Die Bremsanlage umfasst einen ersten Bremskreis mit zwei Radbremsen und einen zweiten Bremskreis mit zwei Radbremsen. Die zwei Bremskreise sind durch das stromlos geschlossene Kreistrennventil voneinander getrennt. Jeder der Bremskreise ist über ein jeweiliges Trennventil mit einem der beiden Druckräume des zweikreisigen Hauptbremszylinders verbunden. Die Druckseite der Pumpe ist direkt mit dem ersten Bremskreis hydraulisch verbunden. Bei Bedarf kann durch Öffnen des Kreistrennventils mittels der Pumpe Bremsflüssigkeit gleichzeitig in den ersten und den zweiten Bremskreis gepumpt werden. Zur Einsparung eines Pedalwegsimulators ist der erste Druckraum des Hauptbremszylinders über ein Simulatorventil mit dem Druckmittelvorratsbehälter verbindbar.

Aus der DE 10 2012 019 390 A1 ist eine Bremsanlage bekannt, welche vier hydraulisch betätigbaren Radbremsen, ein elektrisch betätigbares Einlassventil je Radbremse, einen mittels eines Bremspedals betätigbaren Hauptbremszylinder, welcher über ein Trennventil mit einer Bremsversorgungsleitung trennbar hydraulisch verbunden ist, an welche die Einlassventile (6a-6d) angeschlossen sind, und eine elektrisch steuerbare Druckbereitstellungseinrichtung umfasst.

Es ist Aufgabe der vorliegenden Erfindung, eine alternative, kompakte und kostengünstige Bremsanlage für eine "Bra-ke-by-wire"-Betriebsart und eine Rückfallbetriebsart bereitzustellen, welche einen hohen Funktionsumfang und eine hohe Verfügbarkeit der Bremsanlage, insbesondere bei einer Leckage, bietet. Weiterhin soll ein Verfahren zum Betrieb einer Bremsanlage bereitgestellt werden, welches eine hohe Verfügbarkeit der Bremsanlage, insbesondere bei einer Leckage, bietet.

Diese Aufgabe wird erfindungsgemäß durch eine Bremsanlage gemäß Anspruch 1 und ein Verfahren gemäß Anspruch 8 und 9 gelöst.

Der Erfindung liegt der Gedanke zugrunde in einer Bremsanlage, welche einen Bremspedal-betätigbaren Hauptbremszylinder, eine elektrisch steuerbare Druckbereitstellungseinrichtung mit einem Druckraum, radindividuelle Einlassventil und eine Bremsversorgungsleitung umfasst, an welche die Einlassventile angeschlossen sind, welche mit dem Hauptbremszylinder und der Druckbereitstellungseinrichtung verbunden ist und in welcher ein elektrisch betätigbares Kreistrennventil angeordnet ist zur Trennung der Bremsversorgungsleitung in einen ersten Leitungsabschnitt für zwei der Radbremsen und einen zweiten Leitungsabschnitt für die übrigen Radbremsen, den Hauptbremszylinder einkreisig mit lediglich einer Druckkammer auszuführen sowie das Kreistrennventil stromlos offen auszuführen. Dabei sind die Druckkammer des Hauptbremszylinders über ein Trennventil mit dem ersten Leitungsabschnitt und der Druckraum der Druckbereitstellungseinrichtung mit dem zweiten Leitungsabschnitt verbunden.

Somit ist die Bremsanlage im stromlosen Fall einkreisig aufgebaut, es kann jedoch bei Bedarf auf eine Zweikreisigkeit umgeschaltet werden, wobei jeder Kreis mittels einer der beiden Druckquellen mit Druck beaufschlagt werden kann.

Das Kreistrennventil ist also derart angeordnet, dass bei einem Schließen des Kreistrennventils die Radbremsen hydraulisch in zwei Gruppen bzw. zwei hydraulische Bremskreise getrennt werden, wobei jede Gruppe bzw. jeder Bremskreis mindestens zwei Radbremsen umfasst. Bevorzugt sind jeder Gruppe die Radbremsen einer der Fahrzeugachsen zugeordnet.

Bei geschlossenem Kreistrennventil werden so bei einer Betätigung der Druckbereitstellungseinrichtung nur die an den zweiten Leitungsabschnitt angeschlossenen Einlassventile mit Druck (von der Druckbereitstellungseinrichtung) versorgt, bei einer Betätigung des Hauptbremszylinders werden nur die an den ersten Leitungsabschnitt angeschlossenen Einlassventile mit Druck (von dem Hauptbremszylinder) versorgt.

Die Erfindung bietet den Vorteil, dass der Hauptbremszylinder über ein einziges Trennventil mit der Bremsversorgungsleitung und damit den Einlassventilen bzw. den Radbremsen verbunden werden kann. Außerdem kann auch die Druckbereitstellungseinrichtung über ein einziges Zuschaltventil mit der Bremsversorgungsleitung und damit den Einlassventilen bzw. den Radbremsen verbunden werden. Das Kreistrennventil erlaubt es jedoch bedarfsweise, eine Druckmitteltrennung in zwei Bremskreise vorzunehmen, was bei bekannten Bremsanlagen durch den Schwimmkolben des Tandemhauptbremszylinders realisiert wurde. Ein weiterer Vorteil der Erfindung liegt darin, dass die Kreistrennung vorgenommen werden kann, ohne dabei gleichzeitig die Druckbereitstellungseinrichtung außer Betrieb nehmen zu müssen.

Bevorzugt ist der Druckraum der Druckbereitstellungseinrichtung über ein Zuschaltventil mit der Bremsversorgungsleitung trennbar verbunden, um bei einer Leckage in der Druckbereitstellungseinrichtung diese von der übrigen Bremsanlage hydraulisch isolieren zu können. Besonders bevorzugt ist der Druckraum über lediglich ein Zuschaltventil mit der Bremsversorgungsleitung verbunden. Vorteilhafterweise ist das Zuschaltventil elektrisch betätigbar.

Bevorzugt sind die mit dem ersten Leitungsabschnitt verbundenen Einlassventile den Rädern der ersten Fahrzeugachse und die mit dem zweiten Leitungsabschnitt verbundenen Einlassventile den Rädern der zweiten Fahrzeugachse zugeordnet.

Bevorzugt umfasst der erste hydraulische Bremskreis den Hauptbremszylinder und die Einlassventile der Radbremsen der ersten Fahrzeugachse, vorteilhafterweise der Vorderachse, und der zweite hydraulische Bremskreis die Druckbereitstellungseinrichtung und die Einlassventile der Radbremsen der zweiten Fahrzeugachse, vorteilhafterweise der Hinterachse. So kann im Falle der Kreistrennung an der Hinterachse mittels der Druckbereitstellungseinrichtung noch eine vollständige Antiblockierregelung (ABS) und eine elektronische Bremskraftverteilung (zwischen den Achsen) (EBD) durchgeführt werden.

Zur Druckregelung ist bevorzugt je Leitungsabschnitt ein (Rad) Drucksensor vorgesehen, welcher den Druck hinter einem der dem Leitungsabschnitt zugeordneten Einlassventile erfasst.

Alternativ ist zur Druckregelung bevorzugt, insbesondere lediglich, ein Drucksensor vorgesehen, welcher den Druck der Druckbereitstellungseinrichtung erfasst. Dieser Drucksensor kann vor oder hinter dem Zuschaltventil angeordnet sein.

Zusätzlich ist bevorzugt ein Drucksensor vorgesehen, welcher den Druck des Hauptbremszylinders erfasst.

Bevorzugt ist das Trennventil stromlos offen und das Zuschaltventil stromlos geschlossen ausgeführt, so dass im Falle eines vollständigen Stromausfalls alle Radbremsen mittels des Hauptbremszylinders mit Druck versorgt werden können und ein Abfließen von Druckmittel über die Druckbereitstellungseinrichtung sicher verhindert wird.

Die Bremsanlage umfasst bevorzugt einen unter Atmosphärendruck stehenden Druckmittelvorratsbehälter, dessen Druckmittelstand mittels einer Messvorrichtung erfasst wird. So kann eine Leckage anhand eines Abfalls des Druckmittelstands einfach erkannt werden.

Bevorzugt wird das Kreistrennventil in Abhängigkeit von dem erfassten Druckmittelstand geschlossen. Fällt der erfasste Druckmittelstand unter einen vorgegebenen Schwellenwert so wird besonders bevorzugt eine Kreistrennung durch Schließen des Kreistrennventils durchgeführt.

Der Hauptbremszylinder ist einkreisig ausgeführt, wobei die Druckkammer des Hauptbremszylinders bevorzugt mit der Bremsversorgungsleitung über eine erste Zufuhrleitung mit nur einem Trennventil verbunden ist. Eine weitere hydraulische Verbindung zwischen Hauptbremszylinder und Bremsversorgungsleitung ist nicht vorgesehen.

Gemäß einer bevorzugten Ausführungsform der erfindungsgemäßen Bremsanlage die Druckkammer des Hauptbremszylinders über eine hydraulische Verbindung mit dem Druckmittelvorratsbehälter verbunden ist, wobei in der hydraulischen Verbindung kein elektrisch betätigbares Ventil angeordnet ist.

Alternativ ist es bevorzugt, dass die Druckkammer des Hauptbremszylinders über eine hydraulische Verbindung, in welcher ein elektrisch betätigbaren Diagnoseventil angeordnet ist, mit dem Druckmittelvorratsbehälter verbunden ist.

In beiden Fälle ist die hydraulische Verbindung zwischen Druckkammer und Druckmittelvorratsbehälter durch eine Betätigung / Verschiebung des Hauptbremszylinderkolbens trennbar.

Bevorzugt ist die elektrisch steuerbare Druckbereitstellungseinrichtung einkreisig ausgeführt.

Bevorzugt wird die Druckbereitstellungseinrichtung durch eine Zylinder-Kolben-Anordnung mit nur einem hydraulischen Druckraum gebildet, deren Kolben durch einen elektromechanischen Aktuator betätigbar ist. So ist eine präzise und schnelle Druckstellung möglich.

Dabei ist besonders bevorzugt der einzige Druckraum der Druckbereitstellungseinrichtung über eine zweite Zufuhrleitung mit nur einem Zuschaltventil mit der Bremsversorgungsleitung verbunden ist. Eine weitere hydraulische Verbindung zwischen Druckbereitstellungseinrichtung und Bremsversorgungsleitung ist nicht vorgesehen.

Somit sind nur zwei Ventile (ein Trenn- und ein Zuschaltventil) zum Trennen der Radbremsen von dem einkreisigen Hauptbremszylinder und der einkreisigen Druckbereitstellungseinrichtung zur Realisierung einer "Brake-by-wire"-Betriebsart oder einer Rückfallbetriebsart notwendig.

Bevorzugt umfasst die Bremsanlage je Radbremse ein elektrisch betätigbares Auslassventil, das die zugeordnete Radbremse mit dem Druckmittelvorratsbehälter verbindet.

Die Auslassventile sind bevorzugt über eine gemeinsame hydraulische Verbindung mit dem Druckmittelvorratsbehälter verbunden.

Die Bremsanlage umfasst bevorzugt eine Simulationseinrichtung, welche in einer "Brake-by-wire"-Betriebsart dem Fahrzeugführer ein angenehmes Bremspedalgefühl vermittelt und deren Wirkung in einer Rückfallbetriebsart abschaltbar ist, wobei die Simulationseinrichtung ein elastisches Element umfasst und mit dem der Druckkammer des Hauptbremszylinders hydraulisch verbunden ist.

Bevorzugt ist die Simulationseinrichtung mittels eines Simulatorfreigabeventils zu- und abschaltbar ausgeführt. Das Simulatorfreigabeventil ist besonders bevorzugt in der hydraulischen Verbindung zwischen der Simulationseinrichtung und dem Hauptbremszylinder angeordnet.

Der erste hydraulische Bremskreis umfasst bevorzugt weiterhin die Simulationseinrichtung.

Der erste hydraulische Bremskreis umfasst bevorzugt weiterhin das Trennventil.

Der zweite hydraulische Bremskreis umfasst bevorzugt weiterhin das Zuschaltventil.

Gemäß einer Weiterbildung der Erfindung sind der Hauptbremszylinder, die Druckbereitstellungseinrichtung, die Bremsversorgungsleitung und die Ventile, sowie ggf. die Simulationseinrichtung mit Simulatorfreigabeventil, gemeinsam in einem einzigen elektrohydraulischen Modul bzw. einer einzigen hydraulischen Steuer- und Regeleinheit angeordnet.

Gemäß einer anderen Weiterbildung der Erfindung ist der Hauptbremszylinder in einem ersten elektrohydraulischen Modul bzw. einer ersten hydraulischen Steuer- und Regeleinheit angeordnet, während die Druckbereitstellungseinrichtung, die Bremsversorgungsleitung und die Ventile in einem separaten, zweiten elektrohydraulischen Modul bzw. einer zweiten hydraulischen Steuer- und Regeleinheit angeordnet sind. Die ggf. vorhandene Simulationseinrichtung mit Simulatorfreigabeventil kann in dem ersten elektrohydraulischen Modul bzw. der ersten hydraulischen Steuer- und Regeleinheit oder in dem zweiten elektrohydraulischen Modul bzw. der zweiten hydraulischen Steuer- und Regeleinheit angeordnet sein.

Gemäß einer weiteren Weiterbildung der Erfindung sind der Hauptbremszylinder, die Druckbereitstellungseinrichtung, das Trennventil und das Kreistrennventil, und ggf. das Zuschaltventil und/oder die Simulationseinrichtung mit Simulatorfreigabeventil, in einem ersten elektrohydraulischen Modul bzw. einer ersten hydraulischen Steuer- und Regeleinheit angeordnet, während die Einlassventile, und ggf. die Auslassventile und/oder die Raddrucksensoren, in einem separaten, zweiten elektrohydraulischen Modul bzw. einer zweiten hydraulischen Steuer-und Regeleinheit angeordnet sind.

Bevorzugt handelt es sich um eine Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Bevorzugt umfasst die Bremsanlage je Radbremse ein Einlassventil sowie ein Auslassventil zum Einstellen radindividueller Bremsdrücke. Die radindividuellen Bremsdrücke werden aus dem Bremsversorgungsdruck in der Bremsversorgungsleitung abgeleitet. Im nicht angesteuerten Zustand lassen besonders bevorzugt die Einlassventile den Bremskreisversorgungsdruck zu den Radbremsen weiter und die Auslassventile sperren ein Abströmen von Druckmittel aus den Radbremsen.

Gemäß einer anderen bevorzugten Ausführungsform der erfindungsgemäßen Bremsanlage umfasst diese pro Radbremse lediglich ein Einlassventil zum Einstellen radindividueller Bremsdrücke, die aus dem Bremskreisversorgungsdruck in der Bremsversorgungsleitung abgeleitet werden. Die Bremsanlage wird dann mittels der Druckbereitstellungseinrichtung im sogenannten Multiplex-Verfahren betrieben.

Gemäß einer bevorzugten Ausführungsform der erfindungsgemäßen Bremsanlage umfasst die Bremsanlage an den Rädern der Hinterachse je eine elektrische Parkbremse (EPB). Diese kann in die hydraulischen Radbremsen integriert sein, sogenannte integrierte elektrische Parkbremse (IPB).

Die Erfindung bietet den Vorteil, dass der einkreisige Hauptbremszylinder einfacher und kostengünstiger ist. Weiterhin ist es vorteilhaft, dass der Hauptbremszylinder kürzer als ein Tandemhauptbremszylinder ist, so dass die Baulänge des Bremsaggregats in Fahrzeuglängsrichtung verringert werden kann. Weiterhin bietet die Bremsanlage den Vorteil, dass im fehlerfreien Fall der Bremsanlage ohne Schaltung des Kreistrennventils ein Druckaufbau mittels der Druckbereitstellungseirichtung an allen Radbremsen durchgeführt werden kann. Dennoch ist durch Schließen des Kreistrennventils eine Kreistrennung möglich, so dass der eine Bremskreis weiterhin mittel der Druckbereitstellungseirichtung mit Druck beaufschlagt werden kann, während der andere Bremskreis durch den Hauptbremszylinder mit Druck beaufschlagt werden kann. Die Kreistrennung kann darüber hinaus einfach situationsabhängig gesteuert werden.

Die Erfindung betrifft auch ein Verfahren zum Betrieb einer erfindungsgemäßen Bremsanlage, bei welchem das Kreistrennventil in einem fehlerfreien Zustand der Bremsanlage offen ist und bei einem Verdacht auf eine Leckage oder einem Feststellen einer Leckage in der Bremsanlage geschlossen wird.

Die Erfindung betrifft auch ein Verfahren zum Betrieb einer Bremsanlage mit zumindest vier hydraulisch betätigbaren Radbremsen für Räder, die auf eine erste Fahrzeugachse und eine zweite Fahrzeugachse verteilt sind, zumindest einem elektrisch betätigbaren Einlassventil je Radbremse zum Einstellen radindividueller Bremsdrücke, einem mittels eines Bremspedals betätigbaren Hauptbremszylinder mit einer Druckkammer, wobei die Druckkammer über ein Trennventil mit einer Bremsversorgungsleitung trennbarhydraulisch verbunden ist, an welche die Radbremsen angeschlossen sind, und einer elektrisch steuerbaren Druckbereitstellungseinrichtung mit einem Druckraum, wobei der Druckraum mit der Bremsversorgungsleitung hydraulisch verbunden ist, wobei in der Bremsversorgungsleitung ein elektrisch betätigbares Kreistrennventil derart angeordnet ist, dass bei geschlossenem Kreistrennventil die Bremsversorgungsleitung in einen ersten Leitungsabschnitt und einen zweiten Leitungsabschnitt hydraulisch getrennt ist, wobei der erste Leitungsabschnitt mit zwei der Radbremsen verbunden ist und der zweite Leitungsabschnitt mit den anderen Radbremsen verbunden ist. Dabei ist das Kreistrennventil in einem fehlerfreien Zustand der Bremsanlage offen und das Kreistrennventil wird bei einem Verdacht auf eine Leckage in der Bremsanlage oder einem Feststellen einer Leckage in der Bremsanlage geschlossen.

Bevorzugt ist der Hauptbremszylinder einkreisig, mit nur einer Druckkammer ausgeführt.

Bevorzugt ist die Druckkammer über genau ein Trennventil mit der Bremsversorgungsleitung verbunden. Eine zweite hydraulische Verbindung zwischen Druckkammer und Bremsversorgungsleitung besteht nicht.

Bevorzugt ist das Trennventil elektrisch betätigbar.

Bevorzugt ist der Druckraum der Druckbereitstellungseinrichtung über ein Zuschaltventil mit der Bremsversorgungsleitung trennbar verbunden. Besonders bevorzugt ist das Zuschaltventil elektrisch betätigbar.

Bevorzugt ist auch die Druckbereitstellungseinrichtung einkreisig, mit nur einem Druckraum ausgeführt.

Bevorzugt ist der Druckraum über genau ein Zuschaltventil mit der Bremsversorgungsleitung verbunden. Eine zweite hydraulische Verbindung zwischen Druckraum und Bremsversorgungsleitung besteht nicht.

Bevorzugt wird in dem erfindungsgemäßen Verfahren das Kreistrennventil in Abhängigkeit von einem Druckmittelstand eines Druckmittelvorratsbehälters geschlossen, da anhand des Druckmittelstands des Druckmittelvorratsbehälters eine relevante Leckage direkt erkannt werden kann.

Zur Überwachung der Bremsanlage auf eine Leckage wird bevorzugt das Signal einer Messvorrichtung ausgewertet, welche einen Druckmittelstand eines unter Atmosphärendruck stehenden Druckmittelvorratsbehälters erfasst.

Zum Betrieb der Bremsanlage werden bevorzugt bei geschlossenem Kreistrennventil die dem zweiten Leitungsabschnitt zugeordneten Radbremsen mittels der Druckbereitstellungseinrichtung betätigt, indem Druckmittel aus der Druckbereitstellungseinrichtung über den zweiten Leitungsabschnitt zu diesen Radbremsen verschoben wird. Besonders bevorzugt werden bei geschlossenem Kreistrennventil mittels der Druckbereitstellungseinrichtung nur die dem zweiten Leitungsabschnitt zugeordneten Radbremsen betätigt, die dem ersten Leitungsabschnitt zugeordneten Radbremsen werden nicht mittels der Druckbereitstellungseinrichtung betätigt. Dies ist ganz besonders bevorzugt dadurch gegeben, dass die Druckbereitstellungseinrichtung einkreisig ausgeführt ist und ausschließlich mit dem zweiten Leitungsabschnitt verbunden ist.

Bevorzugt werden bei geschlossenem Kreistrennventil die Radbremsen der zweiten Fahrzeugachse mittels der Druckbereitstellungseinrichtung betätigt. Besonders bevorzugt werden bei geschlossenem Kreistrennventil mittels der Druckbereitstellungseinrichtung nur die Radbremsen der zweiten Fahrzeugachse betätigt, die Radbremsen der ersten Fahrzeugachse werden nicht mittels der Druckbereitstellungseinrichtung betätigt. Dies ist ganz besonders bevorzugt dadurch gegeben, dass die Druckbereitstellungseinrichtung einkreisig ausgeführt ist und ausschließlich mit dem zweiten Leitungsabschnitt verbunden ist, an welchen die Radbremsen der zweiten Fahrzeugachse angeschlossen sind.

Bevorzugt werden bei geschlossenem Kreistrennventil die dem ersten Leitungsabschnitt zugeordneten Radbremsen mittels des Hauptbremszylinders betätigt, indem Druckmittel durch den Fahrer aus dem Hauptbremszylinder über den ersten Leitungsabschnitt zu diesen Radbremsen verschoben wird. Besonders bevorzugt werden bei geschlossenem Kreistrennventil mittels des Hauptbremszylinders nur die dem ersten Leitungsabschnitt zugeordneten Radbremsen betätigt, die dem zweiten Leitungsabschnitt zugeordneten Radbremsen werden nicht mittels des Hauptbremszylinders betätigt. Dies ist ganz besonders bevorzugt dadurch gegeben, dass der Hauptbremszylinder einkreisig ausgeführt ist und ausschließlich mit dem ersten Leitungsabschnitt verbunden ist.

Bevorzugt werden bei geschlossenem Kreistrennventil die Radbremsen der ersten Fahrzeugachse mittels des Hauptbremszylinders betätigt. Besonders bevorzugt werden bei geschlossenem Kreistrennventil nur die Radbremsen der ersten Fahrzeugachse mittels des Hauptbremszylinders betätigt, die Radbremsen der zweiten Fahrzeugachse werden nicht mittels des Hauptbremszylinders betätigt. Dies ist ganz besonders bevorzugt dadurch gegeben, dass der Hauptbremszylinder einkreisig ausgeführt ist und ausschließlich mit dem ersten Leitungsabschnitt verbunden ist, an welchen die Radbremsen der ersten Fahrzeugachse angeschlossen sind.

Bevorzugt handelt es sich bei der ersten Fahrzeugachse um die Vorderachse und bei der zweiten Fahrzeugachse um die Hinterachse. Es ist vorteilhaft, die Kreistrennung derart vorzunehmen, dass bei geschlossenem Kreistrennventil der Hauptbremszylinder die Radbremsen der Vorderachse und die Druckbereitstellungseinrichtung die Radbremsen der Hinterachse betätigen kann, da so an der Hinterachse noch eine vollständige Antiblockierregelung (ABS) und eine elektronische Bremskraftverteilung (zwischen den Achsen) (EBD) durchgeführt werden kann. Außerdem ergibt sich hierdurch ein Auslegungsvorteil für den Hauptbremszylinder bzw. für die hydraulische Rückfallebene, z.B. nach einem Stromausfall. So kann eine Auslegung auf eine Verzögerung von ca. 4 m/s² vorgenommen werden, um bei allen Fehlerbildern, insbesondere Radleckagen, mindestens die gesetzlich geforderte Restbremswirkung von 2,44 m/s² sicherzustellen.

Die Erfindung bietet den Vorteil einer verbesserten Verfügbarkeit bzw. Betriebssicherheit der Bremsanlage. Dadurch, dass grundsätzlich eine einkreisige Bremsanlage verwendet wird und im Falle einer Leckage oder eines Verdachts auf eine Leckage elektrisch gesteuert (mittels des Kreistrennventils) auf eine Zweikreisigkeit der Bremsanlage umgeschaltet wird, wird die Verfügbarkeit der Bremsanlage erhöht.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein zweites Ausführungsbeispiel einer erfindungsgemäßen Bremsanlage,
- Fig. 3: ein drittes Ausführungsbeispiel einer erfindungsgemäßen Bremsanlage, und
- Fig. 4: ein viertes Ausführungsbeispiel einer erfindungsgemäßen Bremsanlage.

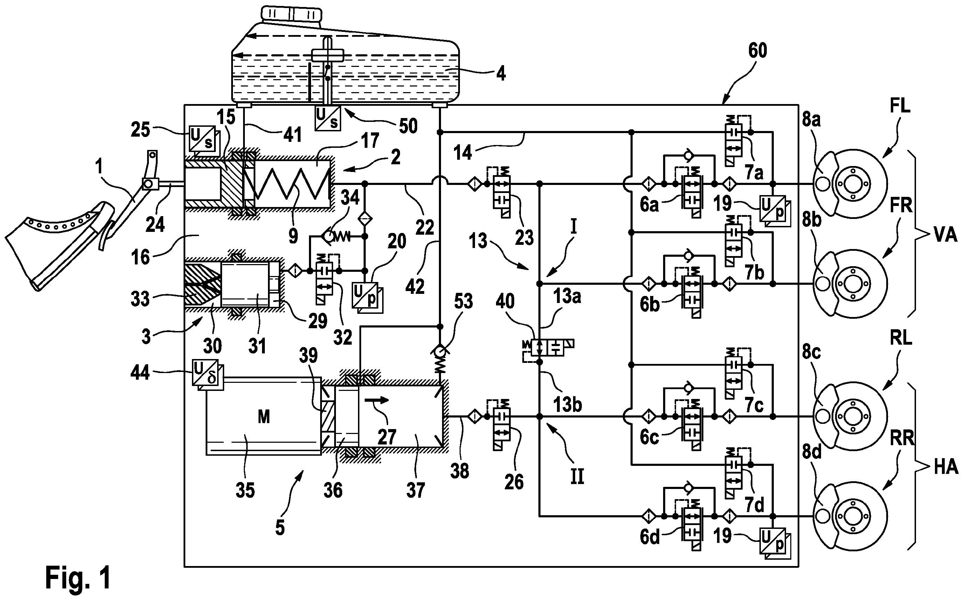

In Fig. 1 ist ein erstes Ausführungsbeispiel einer erfindungsgemäßen Bremsanlage für ein Kraftfahrzeug mit vier hydraulisch betätigbaren Radbremsen 8a-8d schematisch dargestellt. Die Bremsanlage umfasst einen mittels eines Betätigungs- bzw. Bremspedals 1 betätigbaren Hauptbremszylinder 2, einen mit dem Hauptbremszylinder 2 zusammen wirkenden Wegsimulator bzw. eine Simulationseinrichtung 3, einen unter Atmosphärendruck stehenden Druckmittelvorratsbehälter 4, eine elektrisch steuerbare Druckbereitstellungseinrichtung 5, und radindividuelle Bremsdruckmodulationsventile, welche beispielsgemäß als Einlassventile 6a-6d und Auslassventile 7a-7d ausgeführt sind. Weiterhin umfasst die Bremsanlage eine elektronische Steuer- und Regeleinheit 12 zur Ansteuerung der elektrisch betätigbaren Komponenten der Bremsanlage, welche in Fig. 1 nicht dargestellt ist.

Beispielsgemäß ist die Radbremse 8a dem linken Vorderrad (FL), die Radbremse 8b dem rechten Vorderrad (FR), die Radbremse 8c dem linken Hinterrad (RL) und die Radbremse 8d dem rechten Hinterrad (RR) zugeordnet.

Der Hauptbremszylinder 2 weist in einem Gehäuse 16 einen Hauptbremszylinderkolben 15 auf, der eine hydraulische Druckkammer 17 begrenzt, und stellt einen einkreisigen Hauptbremszylinder dar. Die Druckkammer 17 nimmt eine Rückstellfeder 9 auf, die den Kolben 15 bei unbetätigtem Hauptbremszylinder 2 in einer Ausgangslage positioniert. Die Druckkammer 17 steht einerseits über in dem Kolben 15 ausgebildete radiale Bohrungen sowie eine entsprechende Druckausgleichsleitung 41 mit dem Druckmittelvorratsbehälter 4 in Verbindung, wobei diese durch eine Relativbewegung des Kolbens 17 im Gehäuse 16 absperrbar sind. Die Druckkammer 17 steht andererseits mittels eines hydraulischen Leitungsabschnitts (auch als erste Zufuhrleitung bezeichnet) 22 mit einer Bremsversorgungsleitung 13 in Verbindung, an welche die Eingangsanschlüsse der Einlassventile 6a-6d angeschlossen sind. So ist die Druckkammer 17 des Hauptbremszylinders 2 mit allen Einlassventile 6a-6d verbunden.

In der Druckausgleichsleitung 41 bzw. in der Verbindung zwischen der Druckkammer 17 und dem Druckmittelvorratsbehälter 4 ist beispielsgemäß kein Ventil, insbesondere kein elektrisch oder hydraulisch betätigbares Ventil und kein Rückschlagventil, angeordnet.

Alternativ kann in der Druckausgleichsleitung 41 bzw. zwischen dem Hauptbremszylinder 2 und dem Druckmittelvorratsbehälter 4 ein, insbesondere stromlos offenes, Diagnoseventil, bevorzugt eine Parallelschaltung eines stromlos offenen Diagnoseventils mit einem zum Druckmittelvorratsbehälter 4 hin schließenden Rückschlagventil, enthalten sein.

Zwischen der an die Druckkammer 17 angeschlossenen Zufuhrleitung 22 und der Bremsversorgungsleitung 13 ist ein Trennventil 23 angeordnet bzw. Druckkammer 17 ist mit der Bremsversorgungsleitung 13 über die erste Zufuhrleitung 22 mit einem Trennventil 23 verbunden. Trennventil 23 ist als ein elektrisch betätigbares, vorzugsweise stromlos offenes (SO-), 2/2-Wegeventil ausgebildet. Durch das Trennventil 23 kann die hydraulische Verbindung zwischen der Druckkammer 17 und der Bremsversorgungsleitung 13 abgesperrt werden.

Kolbenstange 24 koppelt die Schwenkbewegung des Bremspedals 1 infolge einer Pedalbetätigung mit der Translationsbewegung des Hauptbremszylinderkolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

Ein an die erste Zufuhrleitung 22 angeschlossener Drucksensor 20 erfasst den in der Druckkammer 17 durch ein Verschieben des Kolbens 15 aufgebauten Druck. Dieser Druckwert kann ebenso zur Charakterisierung oder Bestimmung des Bremswunschs des Fahrzeugführers ausgewertet werden. Alternativ zu einem Drucksensor 20 kann auch ein Kraftsensor 20 zur Bestimmung des Bremswunschs des Fahrzeugführers verwendet werden.

Simulationseinrichtung 3 ist beispielsgemäß hydraulisch ausgeführt und hydraulisch an den Hauptbremszylinder 2 angekoppelt. Simulationseinrichtung 3 weist beispielsweise im Wesentlichen eine Simulatorkammer 29, eine Simulatorrückkammer 30 sowie einen die beiden Kammern 29, 30 voneinander trennenden Simulatorkolben 31 auf. Simulatorkolben 31 stützt sich durch ein in der (beispielsgemäß trockenen) Simulatorrückkammer 30 angeordnetes elastisches Element 33 (z.B. Simulatorfeder) an einem Gehäuse ab. Die hydraulische Simulatorkammer 29 ist beispielsgemäß mittels eines vorzugsweise elektrisch betätigbaren, vorzugsweise stromlos geschlossenen Simulatorfreigabeventils 32 mit der Druckkammer 17 des Hauptbremszylinders 2 verbunden. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zur Hauptbremszylinder-Druckkammer 17.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und an die Radbremse 8a-8d angeschlossen sind. Den Einlassventilen 6a-6d ist jeweils ein zu der Bremsversorgungsleitung 13 hin öffnendes, nicht näher bezeichnetes Rückschlagventil parallel geschaltet. Die Ausgangsanschlüsse der Auslassventile 7a-7d sind über eine gemeinsame Rücklaufleitung 14 mit dem Druckmittelvorratsbehälter 4 verbunden.

Die elektrisch steuerbare Druckbereitstellungseinrichtung 5 ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist. Kolben 36 begrenzt den einzigen Druckraum 37 der Druckbereitstellungseinrichtung 5.

Ein der Erfassung der Rotorlage des Elektromotors 35 dienender, lediglich schematisch angedeuteter Rotorlagensensor ist mit dem Bezugszeichen 44 bezeichnet.

An den Druckraum 37 der elektrisch steuerbaren Druckbereitstellungseinrichtung 5 ist ein Leitungsabschnitt (auch als zweite Zufuhrleitung bezeichnet) 38 angeschlossen. Zufuhrleitung 38 ist über ein elektrisch betätigbares, vorzugsweise stromlos geschlossenes, Zuschaltventil 26 mit der Bremsversorgungsleitung 13 verbunden. Durch das Zuschaltventil 26 kann die hydraulische Verbindung zwischen dem Druckraum 37 der elektrisch steuerbaren Druckbereitstellungseinrichtung 5 und der Bremsversorgungsleitung 13 (und damit den Eingangsanschlüssen der Einlassventile 6a-6d) gesteuert geöffnet und abgesperrt werden.

Der durch die Kraftwirkung des Kolbens 36 auf das im Druckraum 37 eingeschlossene Druckmittel erzeugte Aktuatordruck wird in die zweite Zufuhrleitung 38 eingespeist. In einer "Brake-by-Wire"-Betriebsart, insbesondere in einem fehlerfreien Zustand der Bremsanlage, wird Zufuhrleitung 38 über das Zuschaltventil 26 mit der Bremsversorgungsleitung 13 verbunden. Auf diesem Weg erfolgt bei einer Normalbremsung ein Radbremsdruckauf- und -abbau für alle Radbremsen 8a-8d durch Vor-und Zurückfahren der Kolbens 36.

Bei einem Druckabbau durch Zurückfahren des Kolbens 36 strömt das vorher aus dem Druckraum 37 der Druckbereitstellungseinrichtung 5 in die Radbremsen 8a-8d verschobene Druckmittel auf dem gleichen Wege wieder in den Druckraum 37 zurück.

Alternativ können radindividuell unterschiedliche Radbremsdrücken einfach mittels der Einlass- und Auslassventile 6a-6d, 7a-7d eingestellt werden. Bei einem entsprechenden Druckabbau strömt der über die Auslassventile 7a-7d abgelassene Druckmittelanteil über die Rücklaufleitung 14 in den Druckmittelvorratsbehälter 4.

Ein Nachsaugen von Druckmittel in den Druckraum 37 ist durch ein Zurückfahren des Kolbens 36 bei geschlossenem Zuschaltventil 26 möglich, indem Druckmittel aus dem Behälter 4 über die Leitung 42 mit einem in Strömungsrichtung zum Aktuator 5 öffnenden Rückschlagventil 53 in den Akuatordruckraum 37 strömen kann.

Beispielsgemäß ist Druckraum 37 außerdem in einem unbetätigten Zustand des Kolbens 36 über ein oder mehrere Schnüffellöcher mit dem Druckmittelvorratsbehälter 4 verbunden. Diese Verbindung zwischen Druckraum 37 und Druckmittelvorratsbehälter 4 wird bei einer (ausreichenden) Betätigung des Kolbens 36 in Betätigungsrichtung 27 getrennt.

In der Bremsversorgungsleitung 13 ist ein elektrisch betätigbares, stromlos offenes Kreistrennventil 40 angeordnet, durch welches die Bremsversorgungsleitung 13 in einen ersten Leitungsabschnitt 13a, welcher (über das Trennventil 23) mit dem Hauptbremszylinder 2 verbunden ist, und einen zweiten Leitungsabschnitt 13b, welcher (über das Zuschaltventil 26) mit der Druckbereitstellungseinrichtung 5 verbunden ist, trennbar ist. Der erste Leitungsabschnitt 13a ist mit den Einlassventilen 6a, 6b der Radbremsen 8a, 8b verbunden und der zweite Leitungsabschnitt 13b ist mit den Einlassventilen 6c, 6d der Radbremsen 8c, 8d verbunden. Bei geöffnetem Kreistrennventil 40 ist die Bremsanlage einkreisig ausgeführt. Durch Schließen des Kreistrennventils 40 kann die Bremsanlage, insbesondere situationsgerecht gesteuert, in zwei Bremskreise I und II aufgetrennt oder aufgeteilt werden. Dabei ist im ersten Bremskreis I der Hauptbremszylinder 2 (über das Trennventil 23) mit nur noch den Einlassventilen 6a, 6b der Radbremsen 8a, 8b der Vorderachse VA verbunden, und im zweiten Bremskreis II die Druckbereitstellungseinrichtung 5 (bei geöffnetem Zuschaltventil 26) mit nur noch den Radbremsen 8c und 8d der Hinterachse HA verbunden.

Die Eingangsanschlüsse aller Einlassventile 6a-6d können bei offenem Kreistrennventil 40 mittels der Bremsversorgungsleitung 13 mit einem Druck versorgt werden, der in einer ersten Betriebsart (z.B. "Brake-by-Wire"-Betriebsart) dem Bremsdruck entspricht, der von der Druckbereitstellungseinrichtung 5 bereitgestellt wird. Die Bremsversorgungsleitung 13 kann in einer zweiten Betriebsart (z.B. in einer stromlosen Rückfallbetriebsart) mit dem Druck der Druckkammer 17 des Hauptbremszylinders 2 beaufschlagt werden.

Die Bremsanlage umfasst je Bremskreis I bzw. II einen Drucksensor 19. Dieser ist bevorzugt vor einer der Radbremsen des Bremskreises I bzw. II, z.B. den Radbremsen 8a bzw. 8d, z.B. zwischen Einlassventil und Radbremse, angeordnet.

Vorteilhafterweise umfasst die Bremsanlage eine Pegelmesseinrichtung 50 zur Bestimmung eines Druckmittelpegels/-standes in dem Druckmittelvorratsbehälter 4. Vorteilhafterweise erfolgt eine Situationserkennung zur Kreistrennung mittels des Kreistrennventils 40 über die Pegelmesseinrichtung 50.

Beispielsgemäß sind die hydraulischen Komponenten, nämlich der Hauptbremszylinder 2, die Simulationseinrichtung 3, die Druckbereitstellungseinrichtung 5, die Ventile 6a-6d, 7a-7d, 23, 26, 40 und 32 sowie die hydraulischen Verbindungen inklusive der Bremsversorgungsleitung 13, zusammen in einer (einzigen) hydraulischen Steuer- und Regeleinheit 60 (HCU) angeordnet. Der hydraulischen Steuer- und Regeleinheit 60 ist die (einzige) elektronische Steuer- und Regeleinheit (ECU) 12 zugeordnet. Bevorzugt sind hydraulische und elektronische Steuer- und Regeleinheit 60, 12 als eine Einheit (HECU) ausgeführt.

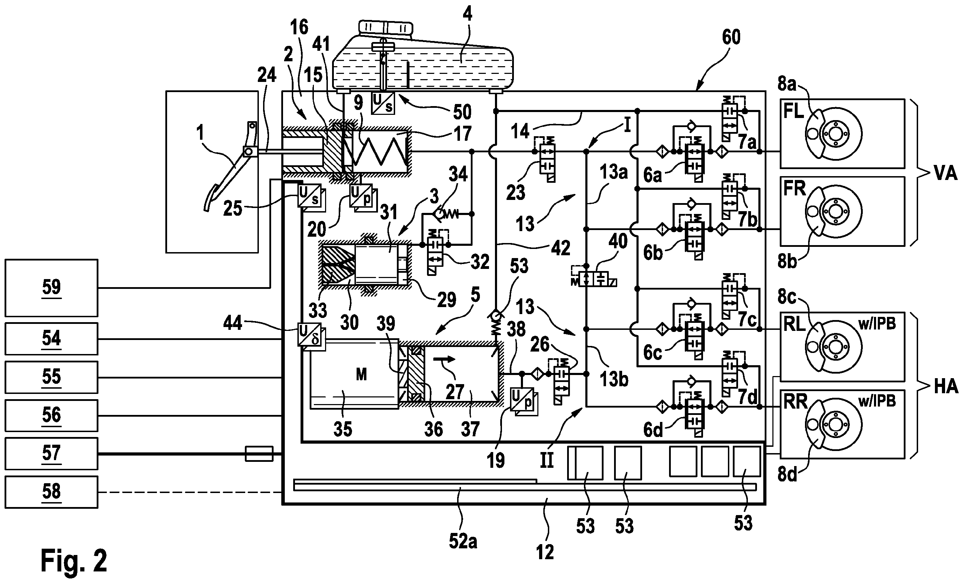

In Fig. 2 ist ein zweites Ausführungsbeispiel einer erfindungsgemäßen Bremsanlage für ein Kraftfahrzeug schematisch dargestellt. Die Bremsanlage an sich entspricht im Wesentlichen dem ersten Ausführungsbeispiel, die Unterschiede werden im Folgenden erläutert. Anstelle der zwei Raddrucksensoren 19 der Fig. 1 ist ein einziger Drucksensor 19 vorgesehen, welcher den Druck der Druckbereitstellungseinrichtung 5 misst. Druckbereitstellungseinrichtung 5 weist keine Schnüffellöcher auf und ist lediglich über die Leitung 42 mit dem Rückschlagventil 53 mit dem Druckmittelvorratsbehälter 4 verbunden. Die Bremsanlage weist an den Rädern RL, RR der Hinterachse HA zusätzlich je eine elektrische Parkbremse (IPB) auf.

Drucksensor 19 misst beispielsgemäß direkt den Druck im Druckraum 37 der Druckbereitstellungseinrichtung 5. Drucksensor 19 ist also beispielsgemäß direkt an den Druckraum 37 angeschlossen, d.h. hydraulisch vor dem Zuschaltventil 26 angeordnet. Alternativ kann Drucksensor 19 den Druck in dem zweiten Leitungsabschnitt 13b der Bremsversorgungsleitung 13 erfassen, d.h. Drucksensor 19 kann hydraulisch nach dem Zuschaltventil 26 angeordnet sein.

Das zweite Ausführungsbeispiel zeigt weitere Aspekte der Bremsanlage, welche auch für eine Bremsanlage gemäß dem ersten Ausführungsbeispiel vorhanden sein können.

In Fig. 2 ist die elektronische Steuer- und Regeleinheit 12 dargestellt. Diese dient beispielsgemäß der Ansteuerung der elektrisch betätigbaren Komponenten der Bremsanlage, insbesondere der Ventile 6a-6d, 7a-7d, 23, 26, 32 und 40 sowie der Druckbereitstellungseinrichtung 5. Die Signale des Drucksensors 19 (oder der Drucksensoren 19 bei Ausführung wie in Fig. 1), des Druck- oder Kraftsensors 20 zur Fahrerwunscherfassung, des Weg-oder Positionssensors 25 für den Hauptbremszylinder 2, des Weg-oder Positionssensors 44 für die Druckbereitstellungseinrichtung 5 und des Weg- oder Positionssensors 50 für den Druckmittelvorratsbehälter 4 werden ebenso bevorzugt der elektronische Steuer- und Regeleinheit 12 zugeführt und/oder in der elektronische Steuer- und Regeleinheit 12 verarbeitet.

Die elektronische Steuer- und Regeleinheit 12 umfasst eine Leiterplatte 52, auf welcher elektrische und elektronische Bauelemente zur Ansteuerung der Aktuatoren, wie der Ventilspulen 53 und des Elektromotors 35, sowie zur Auswertung der der ECU 12 zugeführten Signale vorgesehen sind.

Die Steuer- und Regeleinheit 12 wird von einer elektrischen Energiequelle 57, z.B. einer Batterie oder einem Bordnetz, versorgt.

Die Steuer- und Regeleinheit 12 ist mit einem Datenbus 58, z.B. einem CAN-Bus, verbunden.

Bevorzugt ist die Steuer- und Regeleinheit 12 mit einer oder mehreren der folgenden Komponenten verbunden bzw. erhält deren Signale:
- einer Mensch-Maschine-Schnittstelle (durch den Block 54 schematisch dargestellt), z.B. einem Schalter, zur Betätigung der, beispielsgemäß an den Rädern der Hinterachse HA angeordneten, elektrischen Parkbremsen (IPB, EPB) durch den Fahrer,
- radindividuellen Raddrehzahlensoren (durch den Block 56 schematisch dargestellt),
- einer Schnittstelle (durch den Block 55 schematisch dargestellt), z.B. einem Schalter, zum Aktivieren/Deaktivieren einer Fahrdynamikregelfunktion (ESC) o.ä. oder zur Verbindung/Trennung mit einer Fahrdynamiksensorik.

Die Einheit (HECU) aus hydraulischer und elektronischer Steuer-und Regeleinheit 60, 12 ist bevorzugt an der Spritzwand oder dem Fahrwerk angebracht, was durch den Block 59 schematisch dargestellt ist.

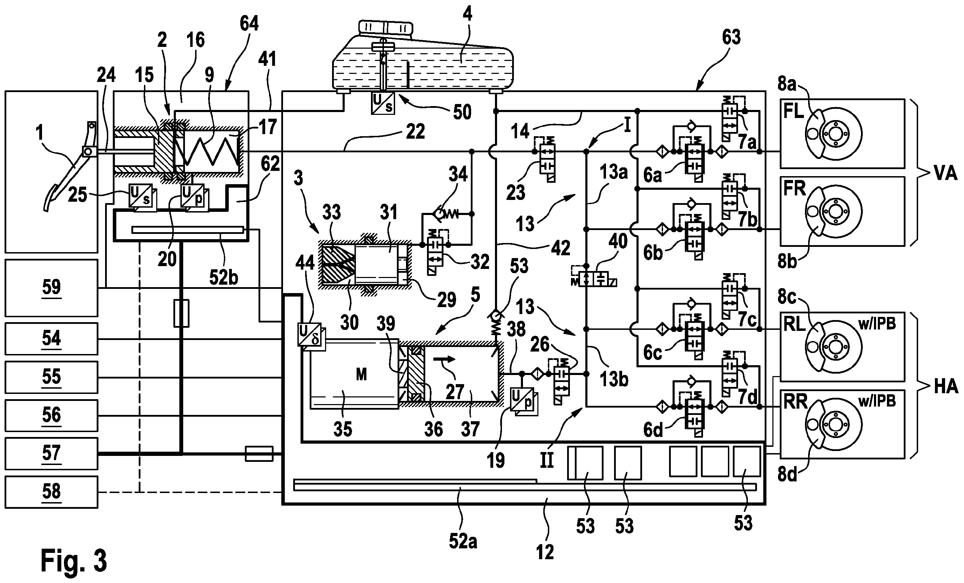

In Fig. 3 ist ein drittes Ausführungsbeispiel einer erfindungsgemäßen Bremsanlage für ein Kraftfahrzeug schematisch dargestellt. Die Bremsanlage entspricht bezüglich der einzelnen Komponenten dem Ausführungsbeispiel der Fig. 2.

Allerdings sind die hydraulischen Komponenten in zwei getrennten Modulen bzw. hydraulischen Steuer- und Regeleinheiten (HCU) 63 und 64 angeordnet. Der hydraulischen Steuer- und Regeleinheit 63 ist die elektronische Steuer- und Regeleinheit (ECU) 12 mit der Leiterplatte 52a zugeordnet und z.B. als eine Einheit (HECU) ausgeführt. Der hydraulischen Steuer- und Regeleinheit 64 ist eine zweite elektronische Steuer- und Regeleinheit (ECU) 62 mit einer Leiterplatte 52b zugeordnet und z.B. als eine Einheit (HECU) ausgeführt.

Beide elektronischen Steuer- und Regeleinheiten 12 und 62 sind mit der elektrischen Energiequelle 57 verbunden.

Der Druckmittelvorratsbehälter 4 ist an der hydraulischen Steuer- und Regeleinheit 63 angeordnet.

Die zweite hydraulische Steuer- und Regeleinheit 64 umfasst beispielsgemäß den Hauptbremszylinder 2 sowie die für die Fahrerbremswunscherfassung vorgesehenen Sensoren 25 und 20. Alle übrigen hydraulischen Komponenten / Sensoren sind in der ersten hydraulischen Steuer- und Regeleinheit 63 angeordnet.

Alternativ kann die zweite hydraulische Steuer- und Regeleinheit 64 auch den Hauptbremszylinder 2 sowie die Simulationseinrichtung 3 (ggf. inkl. der Ventile 32, 34) umfassen.

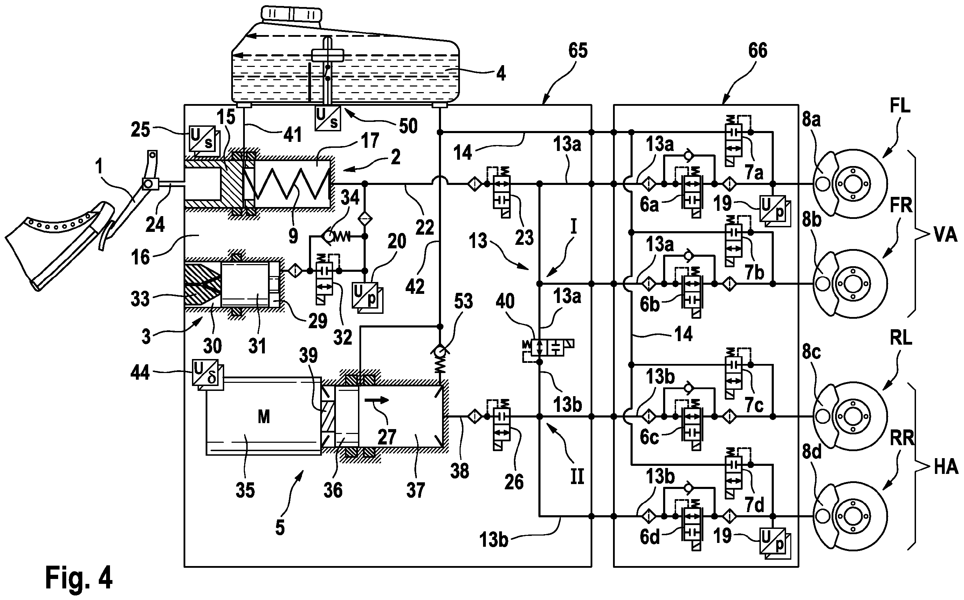

In Fig. 4 ist ein viertes Ausführungsbeispiel einer erfindungsgemäßen Bremsanlage für ein Kraftfahrzeug schematisch dargestellt. Die Bremsanlage entspricht dem Ausführungsbeispiel der Fig. 1, wobei die hydraulischen Komponenten jedoch in zwei getrennten Modulen bzw. hydraulischen Steuer- und Regeleinheiten (HCU) 65 und 66 angeordnet sind.

Die zweite hydraulische Steuer- und Regeleinheit 66 umfasst die Bremsdruckmodulationsventile, beispielsgemäß die Einlassventile 6a-6d und Auslassventile 7a-7d. Beispielsgemäß sind auch die beiden Raddrucksensoren 19 in der zweite hydraulische Steuer- und Regeleinheit 66 angeordnet. Alle übrigen hydraulischen Komponenten / Sensoren sind in der ersten hydraulischen Steuer- und Regeleinheit 65 angeordnet.

Vorteilhafterweise ist die erste hydraulische Steuer- und Regeleinheit 65 an der Spritzwand des Fahrzeugs angeordnet. Die zweite hydraulische Steuer- und Regeleinheit 66, die sich nicht an der Spritzwand befindet, ist über hydraulische Verbindungen (Teile der Leitungen 13a, 13b und 14) mit der ersten hydraulischen Steuer- und Regeleinheit 65 verbunden.

Der Druckmittelvorratsbehälter 4 ist an der ersten hydraulischen Steuer- und Regeleinheit 65 angeordnet.

Beispielsgemäß wird ein erfindungsgemäßes Verfahren zum Betrieb einer Bremsanlage in einer Bremsanlage durchgeführt mit zumindest vier hydraulisch betätigbaren Radbremsen 8a-8d für Räder FR, FL, RL, RR die auf eine erste Fahrzeugachse VA und eine zweite Fahrzeugachse HA verteilt sind, mit zumindest einem elektrisch betätigbaren Einlassventil 6a-6d je Radbremse 8a-8d zum Einstellen radindividueller Bremsdrücke, mit einem mittels eines Bremspedals 1 betätigbaren Hauptbremszylinder 2 mit einer Druckkammer 17, wobei die Druckkammer 17 über ein Trennventil 23 mit einer Bremsversorgungsleitung 13 trennbar hydraulisch verbunden ist, an welche die Radbremsen 8a-8d angeschlossen sind, und mit einer elektrisch steuerbaren Druckbereitstellungseinrichtung 5 mit einem Druckraum 37, wobei der Druckraum 37 mit der Bremsversorgungsleitung 13 hydraulisch verbunden ist. Dabei ist in der Bremsversorgungsleitung 13 ein elektrisch betätigbares Kreistrennventil 40 derart angeordnet, dass bei geschlossenem Kreistrennventil 40 die Bremsversorgungsleitung 13 in einen ersten Leitungsabschnitt 13a und einen zweiten Leitungsabschnitt 13b hydraulisch getrennt ist, wobei der erste Leitungsabschnitt 13a mit den Radbremsen 8a, 8b verbunden ist und der zweite Leitungsabschnitt 13b mit den Radbremsen 8c, 8d verbunden ist.

Gemäß dem Verfahren zum Betrieb ist das Kreistrennventil 40 in einem fehlerfreien Zustand der Bremsanlage offen und das Kreistrennventil 40 wird bei einem Verdacht auf eine Leckage in der Bremsanlage oder einem Feststellen einer Leckage in der Bremsanlage geschlossen. Hierzu ist beispielsgemäß ein Signal einer Messvorrichtung 50 ausgewertet, welche einen Druckmittelstand eines unter Atmosphärendruck stehenden Druckmittelvorratsbehälters 4 erfasst. Das Kreistrennventil 40 wird in Abhängigkeit von dem Druckmittelstand des Druckmittelvorratsbehälters 4 geschlossen, d.h. die Bremsanlage wird in zwei Bremskreise geteilt.

Beispielsgemäß werden bei geschlossenem Kreistrennventil 40 die dem zweiten Leitungsabschnitt 13b zugeordneten Radbremsen 8c, 8d mittels der Druckbereitstellungseinrichtung 5 betätigt und die dem ersten Leitungsabschnitt 13a zugeordneten Radbremsen 8a, 8b mittels des Hauptbremszylinders (2) betätigt.

Vorteilhafterweise werden bei geschlossenem Kreistrennventil 40 die Radbremsen 8c, 8d der Hinterachse HA mittels der Druckbereitstellungseinrichtung betätigt, während die Radbremsen 8a, 8b der Vorderachse VA mittels des Hauptbremszylinders 2 betätigt werden.

Das Verfahren wird bevorzugt in einer erfindungsgemäßen Bremsanlage, z.B. in einer der beispielsgemäßen Bremsanlagen der Fig. 1 bis 3 durchgeführt.

Eine Trennung in zwei Bremskreise, welche z.B. für den Fall einer Leckage in der Bremsanlage relevant ist, um zumindest einen der Bremskreise weiterhin zum Bremsen nutzen zu können, wird in aus dem Stand der Technik bekannten Bremsanlagen durch den Schwimmkolben eines Tandemhauptbremszylinders realisiert.

Bei den beispielsgemäßen Bremsanlagen ist der Hauptbremszylinder 2 einkreisig ausgeführt, wodurch dieser mittels nur eines einzigen Trennventils 23 mit der Bremsversorgungsleitung 13 (d.h. allen Einlassventilen 6a-6d) verbunden werden kann bzw. von der Bremsversorgungsleitung 13 getrennt werden kann.

Weiterhin ist beispielsgemäß die Druckbereitstellungseinrichtung 5 einkreisig ausgeführt und mittels nur eines einzigen Zuschaltventils 26 mit der Bremsversorgungsleitung 13 (d.h. allen Einlassventilen 6a-6d) verbindbar bzw. von der Bremsversorgungsleitung 13 trennbar.

Weiterhin ist ein stromlos offenes Kreistrennventil 40 in der Bremsversorgungsleitung 13 vorgesehen, das es erlaubt, die Bremsanlage situationsangepasst und zeitweise in zwei Bremskreise I, II zu trennen.

Ein Vorteil der Erfindung liegt darin, dass eine Kreistrennung situationsabhängig aktiviert werden kann. Ein weiterer Vorteil ist es, dass hierbei die Druckbereitstellungseinrichtung 5 nicht deaktiviert werden muss.

Des Weiteren wird es als besonders vorteilhaft betrachtet, dass der Hauptbremszylinder 2 nach der Kreistrennung mit den Vorderachsradbremsen 8a, 8b verbunden ist bzw. wird, und die Druckbereitstellungseinrichtung 5 mit den Hinterachsradbremsen 8c, 8d verbunden ist bzw. wird, da hierdurch an der Hinterachse HA noch ein vollständiges ABS (Antiblockierregelung) oder eine EBD (Electronic Brakeforce Distribution bzw. Elektronische Bremskraftverteilung: EBV regelt automatisch den Bremsdruck an den Hinterachsradbremsen und hält das Fahrzeug stabil bei bestmöglicher Abbremsung der Hinterachse) geregelt werden kann. Außerdem ergibt sich hierdurch ein Auslegungsvorteil für die hydraulische Rückfallebene nach Stromausfall in der Art, dass man eine Auslegung auf ca. 4m/s² anstreben kann, um bei allen Fehlerbildern, insbesondere Radleckagen, mindestens die gesetzl. geforderte Restbremswirkung von 2.44m/s² zu garantieren.

## Patentansprüche

1. Bremsanlage für ein Kraftfahrzeug mit zumindest vier hydraulisch betätigbaren Radbremsen (8a-8d) für Räder (FL, FR, RL, RR), die auf eine erste Fahrzeugachse (VA) und eine zweite Fahrzeugachse (HA) verteilt sind, umfassend
• ein elektrisch betätigbares Einlassventil (6a-6d) je Radbremse (8a-8d) zum Einstellen radindividueller Bremsdrücke,
• einen mittels eines Bremspedals (1) betätigbaren Hauptbremszylinder (2), welcher über ein Trennventil (23) mit einer Bremsversorgungsleitung (13) trennbar hydraulisch verbunden ist, an welche die Einlassventile (6a-6d) angeschlossen sind, und
• eine elektrisch steuerbare Druckbereitstellungseinrichtung (5) mit einem Druckraum (37), wobei der Druckraum (37) mit der Bremsversorgungsleitung (13) hydraulisch verbunden ist,
wobei in der Bremsversorgungsleitung (13) ein elektrisch betätigbares Kreistrennventil (40) derart angeordnet ist, dass bei geschlossenem Kreistrennventil die Bremsversorgungsleitung in einen ersten Leitungsabschnitt (13a) und einen zweiten Leitungsabschnitt (13b) hydraulisch getrennt ist, wobei der erste Leitungsabschnitt (13a) mit zwei der Einlassventile (6a, 6b) verbunden ist und der zweite Leitungsabschnitt (13b) mit den übrigen Einlassventilen (6c, 6d) verbunden ist, und wobei der Druckraum (37) der Druckbereitstellungseinrichtung (5) mit dem zweiten Leitungsabschnitt (13b) hydraulisch verbunden ist,
**dadurch gekennzeichnet, dass** der Hauptbremszylinder (2) einkreisig mit lediglich einer Druckkammer (17) und das Kreistrennventil (40) stromlos offen ausgeführt ist, wobei die Druckkammer (17) des Hauptbremszylinders (2) über das Trennventil (23) mit dem ersten Leitungsabschnitt (13a) verbunden ist.

2. Bremsanlage nach Anspruch 1, **dadurch gekennzeichnet, dass** der Druckraum (37) der Druckbereitstellungseinrichtung (5) über ein Zuschaltventil (26) mit der Bremsversorgungsleitung (13) trennbar verbunden ist.

3. Bremsanlage nach Anspruch 1 oder 2, **dadurch gekennzeichnet, dass** die mit dem ersten Leitungsabschnitt (13a) verbundenen Einlassventile (6a, 6b) den Rädern der ersten Fahrzeugachse (VA) und die mit dem zweiten Leitungsabschnitt (13b) verbundenen Einlassventile (6c, 6d) den Rädern der zweiten Fahrzeugachse (HA) zugeordnet sind.

4. Bremsanlage nach Anspruch 3, **dadurch gekennzeichnet, dass** die erste Fahrzeugachse die Vorderachse (VA) und die zweite Fahrzeugachse die Hinterachse (HA) ist.

5. Bremsanlage nach Anspruch 2 oder nach Ansprüchen 3oder 4 wenn abhängig von Anspruch 2, **dadurch gekennzeichnet, dass** das Trennventil (23) stromlos offen und das Zuschaltventil (26) stromlos geschlossen ausgeführt ist.

6. Bremsanlage nach einem der vorhergehenden Ansprüche, **dadurch gekennzeichnet, dass** diese einen unter Atmosphärendruck stehenden Druckmittelvorratsbehälter (4) umfasst, dessen Druckmittelstand mittels einer Messvorrichtung (50) erfasst wird.

7. Bremsanlage nach Anspruch 6, **dadurch gekennzeichnet, dass** die Druckkammer (17) des Hauptbremszylinders (2) über eine hydraulische Verbindung (41) mit dem Druckmittelvorratsbehälter (4) verbunden ist, wobei in der hydraulischen Verbindung kein elektrisch betätigbares Ventil angeordnet ist.

8. Verfahren zum Betrieb einer Bremsanlage nach einem der Ansprüche 1 bis 7, **dadurch gekennzeichnet, dass** das Kreistrennventil (40) in einem fehlerfreien Zustand der Bremsanlage offen ist und bei einem Verdacht auf eine Leckage oder einem Feststellen einer Leckage in der Bremsanlage das Kreistrennventil (40) geschlossen wird.

9. Verfahren zum Betrieb einer Bremsanlage mit
• zumindest vier hydraulisch betätigbaren Radbremsen (8a-8d) für Räder, die auf eine erste Fahrzeugachse (VA) und eine zweite Fahrzeugachse (HA) verteilt sind,
• zumindest einem elektrisch betätigbaren Einlassventil (6a-6d) je Radbremse (8a-8d) zum Einstellen radindividueller Bremsdrücke,
• einem mittels eines Bremspedals (1) betätigbaren Hauptbremszylinder (2) mit einer Druckkammer (17), wobei die Druckkammer über ein Trennventil (23) mit einer Bremsversorgungsleitung (13) trennbar hydraulisch verbunden ist, an welche die Radbremsen (8a-8d) angeschlossen sind, und
• einer elektrisch steuerbaren Druckbereitstellungseinrichtung (5) mit einem Druckraum (37), wobei der Druckraum mit der Bremsversorgungsleitung (13) hydraulisch verbunden ist,
wobei in der Bremsversorgungsleitung (13) ein elektrisch betätigbares Kreistrennventil (40) derart angeordnet ist, dass bei geschlossenem Kreistrennventil die Bremsversorgungsleitung in einen ersten Leitungsabschnitt (13a) und einen zweiten Leitungsabschnitt (13b) hydraulisch getrennt ist, wobei der erste Leitungsabschnitt (13a) mit zwei der Radbremsen (8a, 8b) verbunden ist und der zweite Leitungsabschnitt (13b) mit den anderen Radbremsen (8c, 8d) verbunden ist,
**dadurch gekennzeichnet, dass** das Kreistrennventil (40) in einem fehlerfreien Zustand der Bremsanlage offen ist und bei einem Verdacht auf eine Leckage oder einem Feststellen einer Leckage in der Bremsanlage das Kreistrennventil (40) geschlossen wird.

10. Verfahren nach Anspruch 8 oder 9, **dadurch gekennzeichnet, dass** das Kreistrennventil (40) in Abhängigkeit von einem Druckmittelstand eines Druckmittelvorratsbehälters (4) geschlossen wird.

11. Verfahren nach Anspruch einem der Ansprüche 8 bis 10, **dadurch gekennzeichnet, dass** zur Überwachung der Bremsanlage auf eine Leckage das Signal einer Messvorrichtung (50) ausgewertet wird, welche einen Druckmittelstand eines unter Atmosphärendruck stehenden Druckmittelvorratsbehälters (4) erfasst.

12. Verfahren nach einem der Ansprüche 8 bis 11, **dadurch gekennzeichnet, dass** bei geschlossenem Kreistrennventil (40) die dem zweiten Leitungsabschnitt (13b) zugeordneten Radbremsen (8c, 8d) mittels der Druckbereitstellungseinrichtung (5) betätigt werden.

13. Verfahren nach einem der Ansprüche 8 bis 12, **dadurch gekennzeichnet, dass** bei geschlossenem Kreistrennventil (40) die Radbremsen der zweiten Fahrzeugachse, insbesondere der Hinterachse, mittels der Druckbereitstellungseinrichtung (5) betätigt werden.

14. Verfahren nach einem der Ansprüche 8 bis 13, **dadurch gekennzeichnet, dass** bei geschlossenem Kreistrennventil (40) die dem ersten Leitungsabschnitt (13a) zugeordneten Radbremsen (8a, 8b) mittels des Hauptbremszylinders (2) betätigt werden.

15. Verfahren nach einem der Ansprüche 8 bis 14, **dadurch gekennzeichnet, dass** bei geschlossenem Kreistrennventil (40) die Radbremsen (8a, 8b) der ersten Fahrzeugachse (VA), insbesondere der Vorderachse, mittels des Hauptbremszylinders (2) betätigt werden.

## Claims

1. Brake system for a motor vehicle having at least four hydraulically actuatable wheel brakes (8a-8d) for wheels (FL, FR, RL, RR), which are distributed among a first vehicle axle (VA) and a second vehicle axle (HA), comprising
• an electrically actuatable inlet valve (6a-6d) for each wheel brake (8a-8d) for the purpose of setting wheel-specific brake pressures,
• a master brake cylinder (2) which can be actuated by means of a brake pedal (1) and which is separably hydraulically connected via an isolation valve (23) to a brake supply line (13) to which the inlet valves (6a-6d) are connected, and
• an electrically controllable pressure-providing device (5) having a pressure space (37), wherein the pressure space (37) is hydraulically connected to the brake supply line (13),
wherein an electrically actuatable circuit isolation valve (40) is arranged in the brake supply line (13) in such a way that, with the circuit isolation valve closed, the brake supply line is hydraulically separated into a first line section (13a) and a second line section (13b), wherein the first line section (13a) is connected to two of the inlet valves (6a, 6b), and the second line section (13b) is connected to the remaining inlet valves (6c, 6d), and wherein the pressure space (37) of the pressure-providing device (5) is hydraulically connected to the second line section (13b),
**characterized in that** the master brake cylinder (2) is of single-circuit design with only one pressure chamber (17), and the circuit isolation valve (40) is of normally open design, wherein the pressure chamber (17) of the master brake cylinder (2) is connected to the first line section (13a) via the isolation valve (23).

2. Brake system according to Claim 1, **characterized in that** the pressure space (37) of the pressure-providing device (5) is separably connected to the brake supply line (13) via a sequence valve (26).

3. Brake system according to Claim 1 or 2, **characterized in that** the inlet valves (6a, 6b) connected to the first line section (13a) are assigned to the wheels of the first vehicle axle (VA), and the inlet valves (6c, 6d) connected to the second line section (13b) are assigned to the wheels of the second vehicle axle (HA) .

4. Brake system according to Claim 3, **characterized in that** the first vehicle axle is the front axle (VA), and the second vehicle axle is the rear axle (HA).

5. Brake system according to Claim 2 or according to Claims 3 or 4 if dependent on Claim 2, **characterized in that** the isolation valve (23) is of normally open design, and the sequence valve (26) is of normally closed design.

6. Brake system according to one of the preceding claims, **characterized in that** it comprises a pressure medium reservoir (4) which is under atmospheric pressure and whose pressure medium level is detected by means of a measuring device (50).

7. Brake system according to Claim 6, **characterized in that** the pressure chamber (17) of the master brake cylinder (2) is connected to the pressure medium reservoir (4) via a hydraulic connection (41), wherein no electrically actuatable valve is arranged in the hydraulic connection.

8. Method for operating a brake system according to one of Claims 1 to 7, **characterized in that** the circuit isolation valve (40) is open in a fault-free state of the brake system, and the circuit isolation valve (40) is closed upon a suspicion of a leakage or a determination of a leakage in the brake system.

9. Method for operating a brake system having
• at least four hydraulically actuatable wheel brakes (8a-8d) for wheels which are distributed among a first vehicle axle (VA) and a second vehicle axle (HA),
• at least one electrically actuatable inlet valve (6a-6d) for each wheel brake (8a-8d) for the purpose of setting wheel-specific brake pressures,
• a master brake cylinder (2) which can be actuated by means of a brake pedal (1) and which has a pressure chamber (17), wherein the pressure chamber is separably hydraulically connected via an isolation valve (23) to a brake supply line (13) to which the wheel brakes (8a-8d) are connected, and
• an electrically controllable pressure-providing device (5) having a pressure space (37), wherein the pressure space is hydraulically connected to the brake supply line (13),
wherein an electrically actuatable circuit isolation valve (40) is arranged in the brake supply line (13) in such a way that, with the circuit isolation valve closed, the brake supply line is hydraulically separated into a first line section (13a) and a second line section (13b), wherein the first line section (13a) is connected to two of the wheel brakes (8a, 8b), and the second line section (13b) is connected to the other wheel brakes (8c, 8d),
**characterized in that** the circuit isolation valve (40) is open in a fault-free state of the brake system, and the circuit isolation valve (40) is closed upon a suspicion of a leakage or a determination of a leakage in the brake system.

10. Method according to Claim 8 or 9, **characterized in that** the circuit isolation valve (40) is closed in dependence on a pressure medium level of a pressure medium reservoir (4).

11. Method according to one of Claims 8 to 10, **characterized in that**, to monitor the brake system for a leakage, the signal of a measuring device (50) which detects a pressure medium level of a pressure medium reservoir (4) which is under atmospheric pressure is evaluated.

12. Method according to one of Claims 8 to 11, **characterized in that**, with the circuit isolation valve (40) closed, the wheel brakes (8c, 8d) assigned to the second line section (13b) are actuated by means of the pressure-providing device (5).

13. Method according to one of Claims 8 to 12, **characterized in that**, with the circuit isolation valve (40) closed, the wheel brakes of the second vehicle axle, in particular of the rear axle, are actuated by means of the pressure-providing device (5) .

14. Method according to one of Claims 8 to 13, **characterized in that**, with the circuit isolation valve (40) closed, the wheel brakes (8a, 8b) assigned to the first line section (13a) are actuated by means of the master brake cylinder (2).

15. Method according to one of Claims 8 to 14, **characterized in that**, with the circuit isolation valve (40) closed, the wheel brakes (8a, 8b) of the first vehicle axle (VA), in particular of the front axle, are actuated by means of the master brake cylinder (2)

## Revendications

1. Système de freinage pour un véhicule automobile, comprenant au moins quatre freins de roue (8a-8d) à actionnement hydraulique pour des roues (FL, FR, RL, RR) qui sont réparties sur un premier essieu de véhicule (VA) et un deuxième essieu de véhicule (HA), comprenant
• une soupape d'admission (6a-6d) à actionnement électrique par frein de roue (8a-8d), destinée à régler des pressions de freinage spécifiques à une roue,
• un maître-cylindre de frein (2) pouvant être actionné au moyen d'une pédale de frein (1) et qui est relié hydrauliquement de manière séparable par l'intermédiaire d'une soupape de séparation (23) à une conduite d'alimentation de frein (13) à laquelle sont raccordées les soupapes d'admission (6a-6d), et
• un dispositif de fourniture de pression (5) à commande électrique et doté d'une chambre de pression (37), la chambre de pression (37) étant reliée hydrauliquement à la conduite d'alimentation de frein (13),
dans lequel, dans la conduite d'alimentation de frein (13), une soupape de séparation de circuit (40) à actionnement électrique est disposée de telle sorte que lorsque la soupape de séparation de circuit est fermée, la conduite d'alimentation de frein est séparée hydrauliquement en un premier tronçon de conduite (13a) et un deuxième tronçon de conduite (13b), le premier tronçon de conduite (13a) étant relié à deux des soupapes d'admission (6a, 6b), et le deuxième tronçon de conduite (13b) étant relié aux autres soupapes d'admission (6c, 6d), et la chambre de pression (37) du dispositif de fourniture de pression (5) étant reliée hydrauliquement au deuxième tronçon de conduite (13b),
**caractérisé en ce que** le maître-cylindre de frein (2) est réalisé en un seul circuit doté d'une seule chambre de pression (17), et la soupape de séparation de circuit (40) est réalisée pour être ouverte sans tension, la chambre de pression (17) du maître-cylindre de freins (2) étant reliée au premier tronçon de conduite (13a) par l'intermédiaire de la soupape de séparation (23).

2. Système de freinage selon la revendication 1, **caractérisé en ce que** la chambre de pression (37) du dispositif de fourniture de pression (5) est reliée de manière séparable à la conduite d'alimentation de frein (13) par l'intermédiaire d'une soupape de mise en circuit (26).

3. Système de freinage selon la revendication 1 ou 2, **caractérisé en ce que** les soupapes d'admission (6a, 6b) reliées au premier tronçon de conduite (13a) sont associées aux roues du premier essieu de véhicule (VA), et **en ce que** les soupapes d'admission (6c, 6d) reliées au deuxième tronçon de conduite (13b) sont associées au deuxième essieu de véhicule (HA).

4. Système de freinage selon la revendication 3, **caractérisé en ce que** le premier essieu de véhicule est l'essieu avant (VA) et le deuxième essieu de véhicule est l'essieu arrière (HA).

5. Système de freinage selon la revendication 2 ou selon la revendication 3 ou 4 lorsqu'elle dépend de la revendication 2, **caractérisé en ce que** la soupape de séparation (23) est réalisée pour être ouverte sans tension, et **en ce que** la soupape de mise en circuit (26) est réalisée pour être fermée sans tension.

6. Système de freinage selon l'une quelconque des revendications précédentes, **caractérisé en ce qu'**il comprend un réservoir de stockage de fluide sous pression (4) mis sous pression atmosphérique et dont le niveau de fluide sous pression est détecté au moyen d'un dispositif de mesure (50).

7. Système de freinage selon la revendication 6, **caractérisé en ce que** la chambre de pression (17) du maître-cylindre de frein (2) est reliée au réservoir de stockage de fluide sous pression (4) par l'intermédiaire d'un raccordement hydraulique (41), aucune soupape à actionnement électrique n'étant disposée dans le raccordement hydraulique.

8. Procédé d'exploitation d'un système de freinage selon l'une quelconque des revendications 1 à 7, **caractérisé en ce que** la soupape de séparation de circuit (40) est ouverte dans un état sans défaut du système de freinage, et **en ce que** la soupape de séparation de circuit (40) sera fermée si une fuite est soupçonnée ou une fuite est constatée dans le système de freinage.

9. Procédé d'exploitation d'un système de freinage comprenant
• au moins quatre freins de roue (8a-8d) à actionnement hydraulique pour des roues qui sont réparties sur un premier essieu de véhicule (VA) et un deuxième essieu de véhicule (HA),
• au moins une soupape d'admission (6a-6d) à actionnement électrique par frein de roue (8a-8d) pour régler des pressions de freinage spécifiques à une roue,
• un maître-cylindre de frein (2) pouvant être actionné au moyen d'une pédale de frein (1) et doté d'une chambre de pression (17), la chambre de pression étant reliée hydrauliquement de manière séparable par l'intermédiaire d'une soupape de séparation (23) à une conduite d'alimentation de frein (13) à laquelle sont raccordés les freins de roue (8a-8d), et
• un dispositif de fourniture de pression (5) à commande électrique et doté d'une chambre de pression (37), la chambre de pression étant reliée hydrauliquement à la conduite d'alimentation de frein (13),
dans lequel, dans la conduite d'alimentation de frein (13), une soupape de séparation de circuit (40) à actionnement électrique est disposée de telle sorte que lorsque la soupape de séparation de circuit est fermée, la conduite d'alimentation de frein est séparée hydrauliquement en un premier tronçon de conduite (13a) et un deuxième tronçon de conduite (13b), le premier tronçon de conduite (13a) étant relié à deux des freins de roue (8a, 8b), et le deuxième tronçon de conduite (13b) étant relié aux autres freins de roue (8c, 8d), et
**caractérisé en ce que** la soupape de séparation de circuit (40) est ouverte dans un état sans défaut du système de freinage, et si une fuite est soupçonnée ou une fuite est constatée dans le système de freinage, la soupape de séparation de circuit (40) sera fermée.

10. Procédé selon la revendication 8 ou 9, **caractérisé en ce que** la soupape de séparation de circuit (40) sera fermée en fonction d'un niveau de fluide sous pression d'un réservoir de stockage de fluide sous pression (4).

11. Procédé selon l'une quelconque des revendications 8 à 10, **caractérisé en ce que** pour la surveillance du système de freinage quant à une fuite, un signal d'un dispositif de mesure (50) est évalué qui détecte un niveau de fluide sous pression d'un réservoir de stockage de fluide sous pression (4) mis sous pression atmosphérique.

12. Procédé selon l'une quelconque des revendications 8 à 11, **caractérisé en ce que** lorsque la soupape de séparation de circuit (40) est fermée, les freins de roue (8c, 8d) associés au deuxième tronçon de conduite (13b) sont actionnés au moyen du dispositif de fourniture de pression (5).

13. Procédé selon l'une quelconque des revendications 8 à 12, **caractérisé en ce que** lorsque la soupape de séparation de circuit (40) est fermée, les freins de roue du deuxième essieu de véhicule, en particulier de l'essieu arrière, sont actionnés au moyen du dispositif de fourniture de pression (5).

14. Procédé selon l'une quelconque des revendications 8 à 13, **caractérisé en ce que** lorsque la soupape de séparation de circuit (40) est fermée, les freins de roue (8a, 8b) associés au premier tronçon de conduite (13a) sont actionnés au moyen du maître-cylindre de frein (2).

15. Procédé selon l'une quelconque des revendications 8 à 14, **caractérisé en ce que** lorsque la soupape de séparation de circuit (40) est fermée, les freins de roue (8a, 8b) du premier essieu de véhicule (VA), en particulier de l'essieu avant, sont actionnés au moyen du maître-cylindre de frein (2).
